(19) Europäisches Patentamt
European Patent Office
Office européen des brevets

(11) EP 1 860 469 A1

(12) # EUROPEAN PATENT APPLICATION
published in accordance with Art. 158(3) EPC

(43) Date of publication:
**28.11.2007 Bulletin 2007/48**

(21) Application number: **06715003.7**

(22) Date of filing: **01.03.2006**

(51) Int Cl.:
***G02B 5/30*** *(2006.01)* ***G02F 1/1335*** *(2006.01)*

(86) International application number:
**PCT/JP2006/303886**

(87) International publication number:
**WO 2006/095622 (14.09.2006 Gazette 2006/37)**

(84) Designated Contracting States:
**DE**

(30) Priority: **08.03.2005 JP 2005064329**

(71) Applicant: **MITSUBISHI CHEMICAL CORPORATION**
**Tokyo 108-0014 (JP)**

(72) Inventors:
- **SANO, Hideo2c/o Mitsubishi Chemical Group Science**
  **ku, Yokohama-shi, Kanaga (JP)**
- **KADOWAKI, Masami2c/o Mitsubishi Chemical Group Sci**
  **Yokohama-shi, K (JP)**
- **HASEGAWA, Ryuichi**
  **c/o Mitsubishi Chemical Group Sc**
  **Aoba-ku, Yokohama-shi, (JP)**

(74) Representative: **HOFFMANN EITLE**
**Patent- und Rechtsanwälte**
**Arabellastrasse 4**
**81925 München (DE)**

(54) **COMPOSITION FOR ANISOTROPIC DYESTUFF FILM, ANISOTROPIC DYESTUFF FILM AND POLARIZING ELEMENT**

(57) A composition that has excellent storage stability and excellent film-forming properties for forming films without streaks or irregularities, an anisotropic dye film that is a uniform coating film free of streaks and irregularities and without deterioration in optical properties, and a polarizing element including the anisotropic dye film are provided. This composition includes a dichroic dye, an agent having at least one function selected from the group consisting of a fungicidal function, an antimicrobial function, and a bactericidal function, and a solvent. The anisotropic dye film and the polarizing element are formed of the composition.

Fig. 2

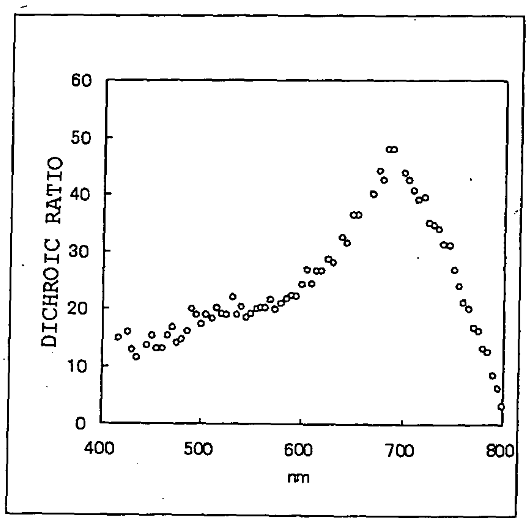


EP 1 860 469 A1

## Description

### Technical Field

The present invention relates to an anisotropic dye film composition, and an anisotropic dye film and a polarizing element each formed of the anisotropic dye film composition. In particular, the present invention relates to a novel anisotropic dye film composition that is useful for polarizing films for use in photochromic elements, liquid crystal elements, and display elements of organic electroluminescent devices (OLEDs) and that has excellent storage stability, and an anisotropic dye film and a polarizing element each formed of the anisotropic dye film composition.

### Background Art

In liquid crystal displays (LCDs), linearly polarizing plates or circularly polarizing plates are used to control optical rotation or birefringence in display. In OLEDs, circularly polarizing plates are also used to prevent reflection of extraneous light. Hitherto, iodine has widely been used as a dichroic substance in polarizing films for use in polarizing elements including these polarizing plates. However, because iodine sublimes easily, polarizing films containing iodine have poor heat resistance and poor lightfastness. Furthermore, because the extinction color is dark blue, the polarizing films containing iodine are not necessarily ideal achromatic polarizing plates over the whole visible spectral region.

Thus, anisotropic dye films, such as polarizing films using organic dyes as dichroic substances, have been studied. As one of such methods, a method for aligning a dichroic dye on a substrate, such as a glass substrate or a transparent film, by utilizing intermolecular interaction of organic dye molecules has recently been studied, as described in Non-patent Documents 1 and 2. This method includes the steps of loading (coating) a composition containing the dichroic dye and a solvent onto the substrate, removing the solvent, and aligning the dye on the substrate. In this method, the dye is aligned by the intermolecular interaction of the dye molecules to form a polarizing film. The operating conditions of the steps must therefore be controlled appropriately. Furthermore, the composition containing the dichroic dye and the solvent must be selected suitably for the method.

Hitherto, there has been a problem that a composition containing a dichroic dye and a solvent forms solids during storage. The solids in the composition can cause streaks or irregularities during the coating of the composition, thus making the coating film nonuniform. Thus, a uniform coating film cannot be prepared.
Furthermore, a defect of unknown origin occurred during the storage of an anisotropic dye film formed of the composition. Deterioration in optical properties probably caused by this defect was a problem.
Non-patent Document 1: Dreyer, J.F., Phys. and Colloid Chem., 1948, 52, 808., "The Fixing of Molecular Orientation"
Non-patent Document 2: Dreyer, J.F, Journal de Physique, 1969, 4, 114., "Light Polarization From Films of Lyotropic Nematic Liquid Crystals"

### Disclosure of Invention

It is an object of the present invention to provide a composition containing a dichroic dye and a solvent for use in manufacture of an anisotropic dye film. The composition does not form solids during storage and has excellent storage stability. It is another object of the present invention to provide a composition that has excellent film-forming properties for forming films without streaks or irregularities caused by solids, an anisotropic dye film that is a uniform coating film free of streaks and irregularities and without deterioration in optical properties, and a polarizing element including the anisotropic dye film.

An anisotropic dye film composition according to a first aspect of the present invention includes a dichroic dye, an agent having at least one function selected from the group consisting of a fungicidal function, an antimicrobial function, and a bactericidal function, and a solvent.

An anisotropic dye film according to a second aspect of the present invention is formed of the anisotropic dye film composition according to the first aspect.

An anisotropic dye film according to a third aspect of the present invention includes a dichroic dye and an agent having at least one function selected from the group consisting of a fungicidal function, an antimicrobial function, and a bactericidal function.

A polarizing element according to a fourth aspect of the present invention includes the anisotropic dye film according to the second aspect.

A polarizing element according to a fifth aspect of the present invention includes the anisotropic dye film according to the third aspect.

Brief Description of the Drawings

Fig. 1 is a graph illustrating the transmittances (Tz and Ty) of an anisotropic dye film according to Example 4 as a function of wavelength in a visible light region.
Fig. 2 is a graph illustrating the dichroic ratio D = - log (Tz/100) / -log (Ty/100) of the anisotropic dye film according to Example 4 as a function of wavelength in the visible light region.

Best Mode for Carrying Out the Invention

The present inventors found that solids formed in a composition during storage are caused by molds or bacteria. The present inventors also found that an agent having at least one function selected from the group consisting of a fungicidal function, an antimicrobial function, and a bactericidal function contained in the composition can improve storage stability and prevent the generation of molds and bacteria in the composition, thereby reducing the nonuniformity of a coating film and producing a coating film without deterioration in optical properties.
The present inventors also found that defects developed during the storage of an anisotropic dye film are also caused by molds or bacteria present in the anisotropic dye film. The present inventors then found that the agent contained in the anisotropic dye film can provide an anisotropic dye film free of defects and without deterioration in optical properties, thus achieving the present invention.
An anisotropic dye film composition according to the present invention includes a dichroic dye, an agent having at least one function selected from the group consisting of a fungicidal function, an antimicrobial function, and a bactericidal function, and a solvent. In this composition, the growth of molds and bacteria can be suppressed during manufacture, transport, and storage. Thus, the composition has excellent storage stability and excellent film-forming properties. Furthermore, as a result of the excellent film-forming properties of the composition, a dye film formed of the composition and a polarizing element including the dye film have no light leakage due to point defects caused by foreign matters and therefore have high quality.
An anisotropic dye film formed of an anisotropic dye film composition according to the present invention serves as a high-quality dye film and a high-quality polarizing element, each being free of point defects that are caused by the precipitation of an agent having at least one function selected from the group consisting of a fungicidal function, an antimicrobial function, and a bactericidal function in the anisotropic dye film, followed by phase separation.
Furthermore, in an anisotropic dye film containing the agent according to the present invention, the growth of molds and bacteria during storage can be suppressed. Hence, in the anisotropic dye film, defects caused by molds or bacteria and deterioration in optical properties can be avoided.
The following description concerns an embodiment (representative embodiment) of the present invention. However, the present invention is not limited to the embodiment.
An anisotropic dye film composition according to the present invention includes a dichroic dye, an agent having at least one function selected from the group consisting of a fungicidal function, an antimicrobial function, and a bactericidal function, and a solvent. The term "anisotropic dye film" used herein means a dye film having electromagnetic anisotropy in any two directions selected from three directions in a three-dimensional coordinate system including the thickness direction and two in-plane directions orthogonal to the thickness direction. Examples of the electromagnetic properties include optical properties, such as absorption and refraction, and electrical properties, such as resistance and capacitance. Examples of films having anisotropy in optical properties, such as absorption and refraction, include linearly polarizing films, circularly polarizing films, retardation films, and anisotropic conductive films. Thus, an anisotropic dye film composition according to the present invention is preferably used in polarizing films, retardation films, and anisotropic conductive films and is more preferably used in polarizing films. Furthermore, an anisotropic dye film composition according to the present invention is used to form an anisotropic dye film by a wet film-forming method.
The composition will be described in detail below.
The term "dichroic dye" used herein means a dye having different absorption intensities in a transition moment direction and in a direction orthogonal to the transition moment direction. The dichroic dye may be any dye having dichroism. However, in terms of a modulation function of an anisotropic dye film, the dichroic ratio expressed by the following equation is typically at least two and preferably at least five.
$$\text{Dichroic ratio (D)} = Az / Ay$$

Az = -log (Tz)
Ay = -log (Ty)
Tz: transmittance of polarized light in the direction of an absorption axis of a dye film
Ty: transmittance of polarized light in the direction of a polarization axis of the dye film

Typical examples of the dichroic dye include condensed polycyclic dyes and azo dyes. Furthermore, dyes described in U.S. patent No. 2,400,877, Dreyer, J.F., Phys. And Colloid Chem., 1948, 52, 808., "The Fixing of Molecular Orientation," Dreyer J.F., Journal de Physique, 1969, 4, 114., "Light Polarization From Films of Lyotropic Nematic Liquid Crystals", and J. Lydon, "Chromonics" in Handbook of Liquid Crystals Vol. 2B: Low Molecular Weight Liquid Crystals II," D. Demus, J. Goodby, G.W. Gray, H.W. Spiessm, V. Vill ed., Willey-VCH, p. 981-1007, (1998) can be used.

Furthermore, the dye is typically a water-soluble dye in terms of solubility and is preferably an azo dye, particularly a disazo dye and a trisazo dye in terms of the characteristics of the resulting anisotropic dye film. Among them, a trisazo dye expressed by the following formula (2-1) or a disazo dye expressed by the following formula (2-2) is preferred:

$$Ar^1\text{-N=N-}Ar^2\text{-N=N-}Ar^3\text{-N=N-}Ar^4 \quad (2\text{-}1)$$

$$Ar^1\text{-N=N-}Ar^2\text{-N=N-}Ar^4 \quad (2\text{-}2)$$

wherein, $Ar^1$ and $Ar^4$ independently denote an aromatic hydrocarbon ring group optionally having a substituent or a heteroaromatic ring group optionally having a substituent. $Ar^2$ and $Ar^3$ independently denote a bivalent aromatic hydrocarbon ring group optionally having a substituent or a bivalent heteroaromatic ring group optionally having a substituent.

Examples of the aromatic hydrocarbon ring group include a phenyl group and a naphthyl group. Examples of the bivalent aromatic hydrocarbon ring group include a phenylene group and a naphthylene group. Furthermore, examples of the heteroaromatic ring group include a pyridyl group and a quinolyl group. Examples of the divalent heteroaromatic ring group include a 5,8-quinoline-diyl group.

The dyes expressed by the formulae (2-1) and (2-2) are preferably water-soluble. Thus, at least one group of $Ar^1$ to $Ar^4$ preferably has a sulfo group in a free acid form. Examples of the substituent other than the sulfo group include alkyl groups, alkoxy groups, a hydroxyl group, and amino groups. The alkyl groups and the alkoxy groups usually include one to six carbon atoms. In addition, these groups may have a substituent. Examples of the substituent include alkyl groups, alkoxy groups, a hydroxyl group, and amino groups, as described above.

When a dichroic dye for use in the present invention has a sulfo group, the dichroic dye may directly be used in the free acid form or may partly have the acid radicals in a. salt form. Furthermore, the dichroic dye may contain both a dye in a salt form and a dye in a free acid form. Furthermore, the dichroic dye manufactured as a salt form may directly be used or may be converted into a desired salt form. Preferably, the dye for use in the present invention, not in a salt form but in a free form, has a molecular weight of at least 200, particularly at least 300, and typically 1500 or less, particularly 1200 or less.

Furthermore, the dichroic dye for use in the present invention may be contained in the composition, alone or as a combination of at least two dyes.

The amount of dichroic dye according to the present invention in an anisotropic dye film composition depends on the solubility of the dye or the concentration at which an association state such as a lyotropic liquid crystal state is formed. The amount of dichroic dye according to the present invention is typically at least 0.1% by weight, preferably at least 0.5% by weight, and typically 30% by weight or less, preferably 20% by weight or less.

An agent having at least one function selected from the group consisting of a fungicidal function, an antimicrobial function, and a bactericidal function according to the present invention may be any agent having at least one function selected from a fungicidal ability to suppress the development and growth of molds, a bactericidal ability to kill microorganisms, and an antimicrobial ability to suppress the development and growth of microorganisms. The agent may be a known fungicide, a known bactericide, or a known antimicrobial agent. Preferably, the agent does not impair the optical properties of the anisotropic dye film. Examples of the agent having at least one function selected from the group consisting of a fungicidal function, an antimicrobial function, and a bactericidal function according to the present invention include conventional phenols such as 2,4,4'-trichloro-2'-hydroxydiphenyl, chlorine compounds such as chlorine dioxide, iodine compounds such as iodine, and quaternary ammonium salts such as benzalkonium chloride.

Examples of the agents containing 1,2-benzisothiazoline-3-one as an active ingredient include Proxel BDN, Proxel BD20, Proxel GXL, Proxel LV, Proxel XL, Proxel XL2, and Proxel Ultra 10 (Avecia, trade name). Examples of the agents containing polyhexametylene biguanide hydrochloride as an active ingredient include Proxel IB, (Avecia, trade name). Examples of the agents containing dithio-2,2'-bis(benzmethylamide) as an active ingredient include Densil P (Avecia, trade name).

Furthermore, a compound expressed by the following formula (1) is also effective and is particularly preferred because even a trace amount of the compound has an antimicrobial effect.

[ Formula 1]

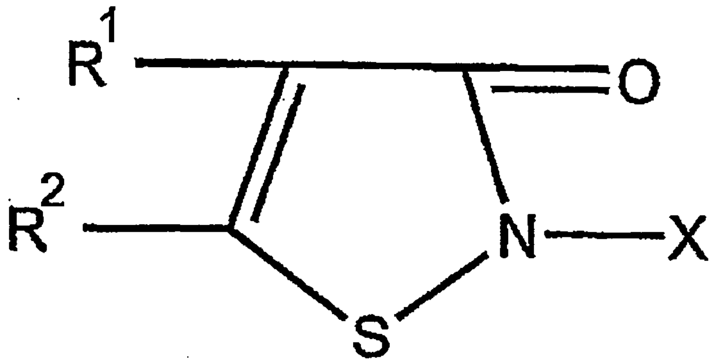 (1)

In the formula (1), X denotes an alkyl group optionally having a substituent, a cycloalkyl group optionally having a substituent, or an aromatic hydrocarbon ring group optionally having a substituent. $R^1$ and $R^2$ independently denote a hydrogen atom, a halogen atom, or an alkyl group.

The alkyl group denoted by X may be an alkyl group containing one to six carbon atoms. The alkyl group preferably has a substituent. Examples of the substituent of the alkyl group include a hydroxyl group, halogen atoms, a cyano group, a phenylamino group, halophenylamino groups, a carboxy group, alkoxycarbonyl groups, alkoxy groups, aryloxy groups, a morpholino group, a piperidino group, a pyrrolidino group, a carbamoyloxy group, and an isothiazolonyl group. The halogen atoms and the halogen atoms in the halophenyl groups are preferably a chlorine atom and a bromine atom. The alkoxy groups and the alkoxy groups in the alkoxycarbonyl groups are preferably straight or branched alkoxy groups containing one to six carbon atoms. The aryl groups of the aryloxy groups are preferably a phenyl group or phenyl groups substituted with a lower alkyl group such as a methyl group or an ethyl group.

The cycloalkyl group denoted by X may be a cycloalkyl group containing five to seven carbon atoms. Among them, a cyclohexyl group is preferred. The substituent of the cycloalkyl group is preferably an alkyl group containing one to six carbon atoms.

The aromatic hydrocarbon ring group denoted by X is preferably a phenyl group. Preferably, the aromatic hydrocarbon ring group has a substituent. The substituent of the aromatic hydrocarbon ring group is preferably a nitro group, an alkyl group, or an alkoxycarbonyl group. The alkyl group is preferably a lower alkyl group and still more preferably a methyl group or an ethyl group. The alkoxycarbonyl group is preferably an alkoxycarbonyl group containing two to seven carbon atoms.

Among them, the group denoted by X is preferably an alkyl group containing one to six carbon atoms and substituted with a halogen atom, a hydroxyl group, a cyano group, or a morpholino group; a cycloalkyl group optionally substituted with an alkyl group containing one to six carbon atoms; or an aromatic hydrocarbon ring group substituted with a halogen atom, a nitro group, or an alkyl group containing one to six carbon atoms.

$R^1$ and $R^2$ independently denote a hydrogen atom, a halogen atom, or an alkyl group. The halogen atom is preferably a chlorine atom or a bromine atom. The alkyl group is preferably an alkyl group containing one to six carbon atoms. Among them, $R^1$ is more preferably a hydrogen atom or a halogen atom and still more preferably a hydrogen atom. $R^2$ is preferably a halogen atom.

The phrase "optionally having a substituent" used herein means "optionally having at least one substituent." When the number of carbon atoms in an alkyl group and in a moiety corresponding to a substituent alkyl group is three or more, the alkyl group or the moiety may be straight or branched.

Typical examples of a compound expressed by the formula (1) are as follows:

2-chloromethyl-5-chloro-3-isothiazolone,
2-cyanomethyl-5-chloro-3-isothiazolone,
2-hydroxymethyl-5-chloro-3-isothiazolone,
2-(3-methylcyclohexyl)-3-isothiazolone,

2-(4-chlorophenyl)-4,5-dichloro-3-isothiazolone,
2-(4-ethylphenyl)-3-isothiazolone,
2-(4-nitrophenyl)-5-chloro-3-isothiazolone,
2-chloromethyl-3-isothiazolone,
2-methoxyphenyl-4-methyl-5-chloro-3-isothiazolone, and
2-morpholinomethyl-5-chloro-3-isothiazolone.

These compounds may be synthesized, for example, according to Japanese Unexamined Patent Application Publication No. 2-278 or may be available as commercial products such as Tribactran (Hoechst, trade name).

Furthermore, an agent having at least one function selected from the group consisting of a fungicidal function, an antimicrobial function, and a bactericidal function according to the present invention may be used alone or in combination thereof.

The amount of antimicrobial agent in an anisotropic dye film composition is selected such that the advantageous effects of the present invention are achieved and that the antimicrobial agent does not unevenly precipitate, for example, by phase separation from a dye during the formation of an anisotropic dye film by a wet film-forming method described below. The amount of antimicrobial agent is typically at least 0.01% by weight, preferably at least 0.001% by weight, and typically 0.5% by weight or less, preferably 0.3% by weight or less.

Below this range, the anisotropic dye film composition cannot have sufficient fungicidal, antimicrobial, or antimicrobial effects. Over this range, the agent may precipitate in the anisotropic dye film composition, or phase separation may occur during the formation of the anisotropic dye film. The precipitation or the phase separation may cause an optical defect such as a point defect or light scattering. Furthermore, an anisotropic dye film formed of an anisotropic dye film composition according to the present invention has a dichroic ratio preferably of at least two and more preferably of at least five.

Furthermore, in a composition according to the present invention, a compound of the formula (1) may be used in combination with N-hydroxy-1,2-oxazolidine.

A solvent for use in the present invention is suitably water, a water-miscible organic solvent, or a mixture thereof. Specific examples of the organic solvent include alcohols such as methyl alcohol, ethyl alcohol, and isopropyl alcohol, glycols such as ethylene glycol and diethylene glycol, and cellosolves such as methyl cellosolve and ethyl cellosolve, alone or in combination thereof.

An anisotropic dye film composition according to the present invention may contain a known dye other than a dichroic dye, provided that the known dye does not impair the alignment.

Examples of a dye suitable for the combination include C.I. Direct Yellow 12, C.I. Direct Yellow 34, C.I. Direct Yellow 86, C.I. Direct Yellow 142, C.I. Direct Yellow 132, C.I. Acid Yellow 25, C.I. Direct Orange 39, C.I. Direct Orange 72, C.I. Direct Orange 79, C.I. Acid Orange 28, C.I. Direct Red 39, C.I. Direct Red 79, C.I. Direct Red 81, C.I. Direct Red 83, C.I. Direct Red 89, C,I. Acid Red 37, C.I. Direct Violet 9, C.I. Direct Violet 35, C.I. Direct Violet 48, C.I. Direct Violet 57, C.I. Direct Blue 1, C.I. Direct Blue 67, C.I. Direct Blue 83, C.I. Direct Blue 90, C.I. Direct Green 42, C.I. Direct Green 51, and C.I. Direct Green 59.

Such a combination of dyes permits the manufacture of anisotropic dye films having various hues.

Furthermore, if necessary, an anisotropic dye film composition according to the present invention may contain an additive agent such as a detergent to improve the wettability or coatability of the composition to a substrate.

The detergent may be anionic, cationic, or nonionic. The detergent content is typically in the range of about 0.05% to about 0.5% by weight.

An anisotropic dye film is formed of an anisotropic dye film composition according to the present invention by a wet film-forming method. More specifically, a composition according to the present invention containing a dichroic dye, an agent having at least one function selected from the group consisting of a fungicidal function, an antimicrobial function, and a bactericidal function, and a solvent is prepared in accordance with routine procedures. The composition is then applied to a substrate such as a glass plate to align and stack the dye in a conventional manner.

Examples of the substrate include a glass substrate and films such as triacetate, acrylic, polyester, cellulose triacetate, and urethane films. Furthermore, to control the alignment of the dichroic dye, an alignment layer may be applied to the surface of the substrate by a known method described in "Ekisyou Binran (Handbook of liquid crystal)," Maruzen Co., Ltd., October 30, 2000, pp. 226-239, for example.

Examples of the wet film-forming method includes coater methods described in Y. Harasaki, "Koutingu Housiki (Coating methods)," Maki Syoten, October 30, 1979, p. 3 (Tables 1 and 2) and pp. 6-154, known methods described in K. Itimura (Ed.), "Bunsi Kyocho Zairyo No Sousei To Ouyou (Creation and Application of Harmonized Molecular Material)," CMC Publishing Co., Ltd., March 3, 1998, pp. 118-149, and coating of a previously aligned substrate by a spin coating method, a spray coating method, a bar coating method, a roll coating method, or a blade coating method.

Preferably, the composition is applied to the substrate at a temperature in the range of 0°C to 80°C and a humidity in the range of 10% to 80% RH. Preferably, the applied composition is dried at a temperature in the range of

0°C to 120°C and a humidity in the range of about 10% to about 80% RH.
The dry thickness of an anisotropic dye film formed on a substrate by the method described above is preferably at least 50 nm, more preferably at least 100 nm, and preferably 50 μm or less, more preferably 1 μm or less.

Because an anisotropic dye film formed by the wet film-forming method usually has a low mechanical strength, the anisotropic dye film may be covered with a protective layer, if necessary. Examples of the protective layer include transparent polymer films such as triacetate, acrylic, polyester, polyimide, cellulose triacetate, and urethane films. The protective layer may be formed on the anisotropic dye film by coating or lamination.

Furthermore, when the present invention is applied to various display devices such as LCDs and OLEDs as a polarizing filter or the like, a dye film may directly be formed on electrode substrates constituting these display devices, or a substrate including a dye film may be used as a component of these display devices.
In the present invention, an anisotropic dye film is preferably formed of the anisotropic dye film composition according to the present invention by a wet film-forming method. However, the growth of molds in the anisotropic dye film may be suppressed not only by a method for forming the anisotropic dye film using an anisotropic dye film composition according to the present invention by the wet film-forming method, but also by inclusion of an agent having at least one function selected from the group consisting of a fungicidal function, an antimicrobial function, and a bactericidal function in the anisotropic dye film. The anisotropic dye film has a dichroic ratio typically of at least two, preferably of at least five, and more preferably of at least 10.
The method may be not only a method for forming the anisotropic dye film using an anisotropic dye film composition by the wet film-forming method, but also inclusion or deposition of an agent having at least one function selected from the group consisting of a fungicidal function, an antimicrobial function, and a bactericidal function in or on the anisotropic dye film by spraying or dipping after the formation of the anisotropic dye film.

The amount of the agent having at least one function selected from the group consisting of a fungicidal function, an antimicrobial function, and a bactericidal function in the anisotropic dye film is typically at least 0.3% by weight, preferably at least 3% by weight, and typically 40% by weight or less, preferably 30% by weight or less.
Furthermore, in an anisotropic dye film according to the present invention, the dichroic dye and the agent having at least one function selected from the group consisting of a fungicidal function, an antimicrobial function, and a bactericidal function are compatible or in a phase separation state of 1000 nm or less. When the dichroic dye and the agent having at least one function selected from the group consisting of a fungicidal function, an antimicrobial function, and a bactericidal function are compatible or in a phase separation state of 1000 nm or less, the resulting film can be free of light scattering defects or depolarization defects.

The phrase "compatible or in a phase separation state of 1000 nm or less" means that no region having a different optical constant is unevenly distributed in an anisotropic dye film. This can be confirmed by examining the presence of light scattering or depolarization by visual inspection or with an optical microscope.
A polarizing element according to the present invention includes the anisotropic dye film according to the present invention. The polarizing element may be composed only of the anisotropic dye film or include the anisotropic dye film formed on a substrate. The polarizing element including a substrate and the anisotropic dye film formed on the substrate is referred to as a polarizing element.

In a polarizing element including an anisotropic dye film according to the present invention formed on a substrate, the anisotropic dye film may be used alone. Alternatively, in addition to the protective layer described above, an adhesive layer or an antireflection layer, an alignment film, and/or layers having various functions, for example, a layer having an optical function such as a retardation film function, a brightness enhanced film function, a reflective film function, a transflective film function, or a diffusion film function, may be stacked on the anisotropic dye film by a wet film-forming method to form a layered product.

These layers having optical functions may be formed by the following method.
The layer having a retardation film function may be formed by drawing as described in Japanese Patent No. 2841377 or Japanese Patent No. 3094113 or by treatment as described in Japanese Patent No. 3168850.
The layer having a brightness enhanced film function may be formed by forming micropores by a method described in Japanese Unexamined Patent Application Publication No. 2002-169025 or Japanese Unexamined Patent Application Publication No. 2003-29030 or may be formed by stacking at least two cholesteric liquid crystal layers having different center wavelengths of selective reflection.

The layer having a reflective film or transflective film function may be formed by using a metallic thin film prepared by vapor deposition or sputtering.
The layer having a diffusion film function may be formed by coating the protective layer with a resin solution containing fine particles.
Furthermore, a layer having a function of a retardation film or an optical compensation film may be formed by applying and aligning a liquid crystal compound such as a discotic liquid crystal compound or a nematic liquid crystal compound.

Since an anisotropic dye film according to the present invention can directly be formed on a heat-resistant substrate such as glass, a heat-resistant polarizing element can be manufactured. Thus, the anisotropic dye film can

suitably be used not only in liquid crystal displays or organic EL displays, but also in heat-resistant applications such as liquid crystal projectors and display panels for vehicles.
An anisotropic dye film according to the present invention functions as a polarizing film for linear polarization, circular polarization, or elliptical polarization by utilizing the anisotropy of light absorption. In addition, the anisotropic dye film can function as a film having a different anisotropy such as refractive anisotropy or conduction anisotropy by the selection of a film-forming process and a composition containing a substrate and a dye. Thus, various polarizing elements for use in a wide variety of applications can be manufactured from the anisotropic dye film.

EXAMPLES

The present invention will now be described more specifically by way of the following examples. However, the present invention is not limited to these examples.
In Examples 1 to 4 and Comparative Examples 1 to 3, a storage test and the evaluation of a dye alignment film substrate were performed as described below.

<Storage test>

Compositions prepared in Examples and Comparative Examples were stored in a hermetically sealed Teflon (registered trademark) container at 60°C for two months. After the storage, the compositions were visually inspected.

<Evaluation of dye alignment film substrate>

The compositions prepared in Examples and Comparative Examples and stored under the conditions of the storage test described above were applied with a bar coater (Tester Sangyo Co,. Ltd., No. 3) to a glass substrate having a polyimide alignment film formed thereon by screen printing (75 mm x 150 mm, thickness 1.1 mm, polyimide film: a polyimide alignment film having a thickness of about 800 nm and previously rubbed with a cloth) and were dried naturally.
The dye alignment film substrate thus prepared was sandwiched between two iodine polarizing films (3M, HN-32, laminated such that the polarization axes intersect at right angles) such that one of the polarization axes and the alignment axis of the dye alignment film intersect at right angles. The presence of point defects such as a white spot was visually inspected on a light box. Furthermore, the presence of defects that cause light scattering, such as phase separation, was examined with a polarizing microscope in which a polarizer and an analyzer intersect at right angles (Nikon Corporation, ECLIPSE E600, x 100 objective lens).

EXAMPLE 1

Fifteen parts of lithium salt of a dye having the following structural formula, 0.2 parts of nonionic detergent Emulgen 109P (Kao Corporation), and 0.035 parts of 2-chloromethyl-5-chloro-3-isothiazolone (No. 1 described above) serving as an agent having an antimicrobial function (hereinafter referred to as antimicrobial agent) were added to 95 parts of water, were dissolved with stirring, and were filtered to yield an aqueous dye solution (anisotropic dye film composition).
The composition was inoculated with typical microorganisms: Pseudomonas aeruginose, Staphylococus aureus, Escherichiacoli, Candida albicans, and Aspergillus niger. The composition was cultured at 25°C for three days. The number of microorganisms was determined by a plate dilution method. Table 1 shows the results.
[ Formula 2]

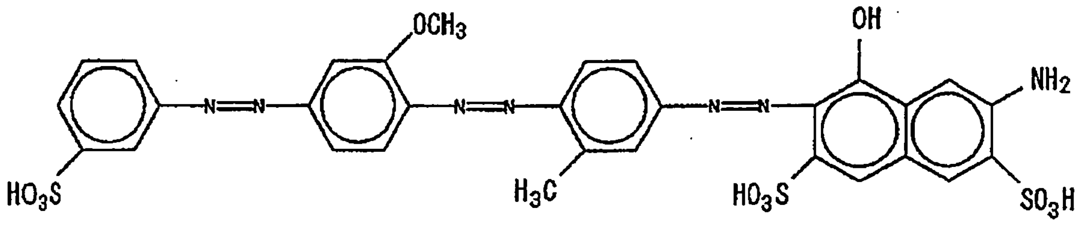

The composition was dropped onto a slide glass. Observation of the drying process of the composition under the polarizing microscope indicated the occurrence of a lyotropic liquid crystal state.
Furthermore, as a result of the storage test, the composition did not form sediments or suspended matters and exhibited excellent storage stability.
A dye alignment film substrate was evaluated using the composition stored under the storage test conditions. Light leakage or scattering caused by point defects or phase separation associated with the composition was not observed. Hence, the dye alignment film substrate had excellent alignment.

COMPARATIVE EXAMPLE 1

An anisotropic dye film composition was prepared in the same way as the composition prepared in Example 1, except that the antimicrobial agent was not used. The anisotropic dye film composition was inoculated with the microorganisms as in Example 1 and was cultured at 25°C for three days. The number of microorganisms was determined by a plate dilution method. Table 1 shows the results.
Furthermore, as a result of the storage test, the composition formed sediments or suspended matters.
A dye alignment film substrate was evaluated using the composition stored under the storage test conditions. Light leakage or scattering due to point defects caused by foreign matters present in the composition was observed. Hence, the absence of an antimicrobial agent was found to greatly reduce the quality of the anisotropic dye film.

EXAMPLE 2

Ten parts of lithium salt of a dye having the following structural formula, 0.2 parts of nonionic detergent Emulgen 109P (Kao Corporation), and 0.025 parts of Tribactran (trade name, Hoechst) serving as an antimicrobial agent were added to 90 parts of water, were dissolved with stirring, and were filtered to yield an aqueous dye solution (anisotropic dye film composition). The composition was inoculated with the microorganisms as in Example 1 and was cultured at 25°C for three days. The number of microorganisms was determined by a plate dilution method. Table 1 shows the results.
[ Formula 3]

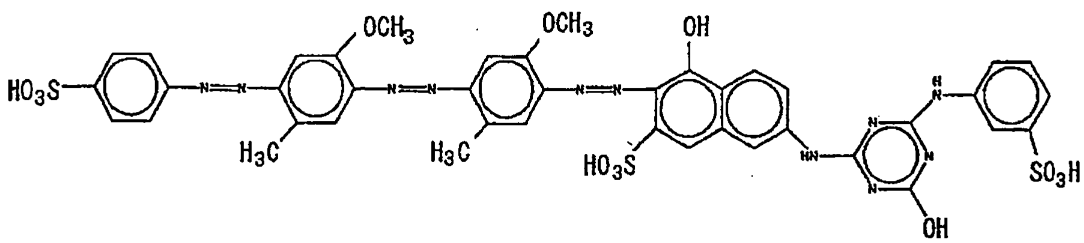

Furthermore, as a result of the storage test, the composition did not form sediments or suspended matters and exhibited excellent storage stability.
The dye alignment film substrate was evaluated using the composition stored under the storage test conditions. Light leakage or scattering caused by point defects or phase separation associated with the composition was not observed.

Hence, the dye alignment film substrate had excellent alignment.

COMPARATIVE EXAMPLE 2

An anisotropic dye film composition was prepared in the same way as the composition prepared in Example 2, except that the antimicrobial agent was not used. The anisotropic dye film composition was inoculated with the microorganisms as in Example 2 and was cultured at 25°C for three days. The number of microorganisms was determined by a plate dilution method. Table 1 shows the results.

Furthermore, as a result of the storage test, the composition formed sediments or suspended matters. A dye alignment film substrate was evaluated using the composition stored under the storage test conditions. Streaks due to point defects caused by foreign matters present in the composition were observed. Hence, the absence of an antimicrobial agent was found to greatly reduce the quality of the anisotropic dye film.

EXAMPLE 3

In the composition of an aqueous dye solution (dye composition for anisotropic dye film) in Example 2, 15 parts of lithium salt of a dye having the following structural formula, 0.2 parts of nonionic detergent Emulgen 109P (Kao Corporation), and 0.3 parts of Proxel XL2 (trade name, Avecia, an antimicrobial agent containing 1,2-benzisothiazoline-3-one as an active ingredient) serving as an antimicrobial agent were added to 85 parts of water, were dissolved with stirring, and were filtered to yield a composition. The composition was inoculated with the microorganisms as in Example 1 and was cultured at 25°C for three days. The number of microorganisms was determined by a plate dilution method. Table 1 shows the results.

[ Formula 4]

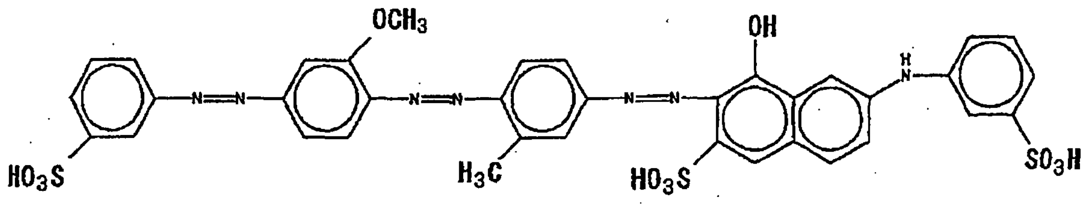

Furthermore, as a result of the storage test, the composition did not form sediments or suspended matters and exhibited excellent storage stability.

COMPARATIVE EXAMPLE 3

An anisotropic dye film composition was prepared in the same way as the composition prepared in Example 3, except that the antimicrobial agent was not used. The anisotropic dye film composition was inoculated with the microorganisms as in Example 1 and was cultured at 25°C for three days. The number of microorganisms was determined by a plate dilution method. Table 1 shows the results.

Furthermore, as a result of the storage test, the composition solution formed sediments or suspended matters.

EXAMPLE 4

Twenty parts of lithium salt of an azo dye having the following structure, one part of sodium salt of an anthraquinone dye having the following structure, and 0.3 parts of Proxel GXL (trade name, Avecia, an antimicrobial agent containing 1,2-benzisothiazoline-3-one as an active ingredient) serving as an antimicrobial agent were added to 79 parts of water, were dissolved with stirring, and were filtered to yield a composition. As a result of the storage test performed as in Example 1, the composition did not form sediments or suspended matters.

A glass substrate including a rubbed polyimide alignment film formed thereon was prepared in the same way

as Example 1. The aqueous dye solution described above was applied to the substrate with an applicator capable of forming films of four thicknesses (Imoto Machinery Co., Ltd.) at a gap of 5 μm and was dried naturally to form an anisotropic dye film.
The transmittance (Tz) of polarized light having a plane of vibration in an in-plane direction of an absorption axis of the resulting anisotropic dye film and the transmittance (Ty) of polarized light having a plane of vibration in an in-plane direction of a polarization axis of the dye film were measured with a spectrophotometer including an iodine polarizing element placed in an incident optical system. Fig. 1 illustrates the transmittances (Tz and Ty) as a function of wavelength in a visible light region. Fig. 2 illustrates the dichroic ratio D = -log (Tz/100) / -log (Ty/100) as a function of wavelength. An anisotropic dye film according to the present invention had a dichroic ratio as high as 10 or more in a wide range of 400 nm to 700 nm, thus exhibiting a high optical absorption anisotropy. The maximum dichroic ratio was at least 40 in visible light. Hence, the anisotropic dye film is believed to be a film having a high degree of molecular orientation.

[ Formula 5]

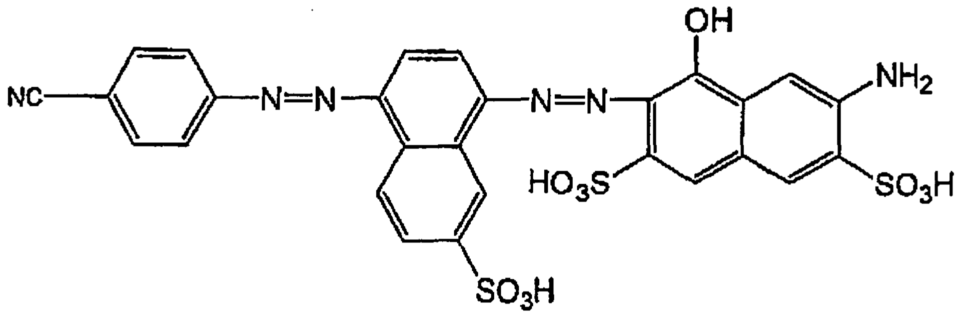

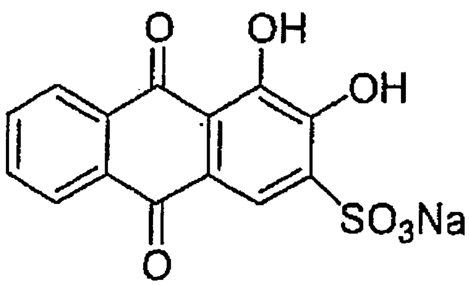

[Table 1]

| | Antimicrobial agent | Content (ppm) | Number of microorganisms (/ml) |
|---|---|---|---|
| Example 1 | Compound No. 1 | 350 | 0 |
| Comparative Example 1 | - | 0 | $3.2\times10^{7}$ |
| Example 2 | Tribactran (Hoechst) | 250 | 0 |
| Comparative Example 2 | - | 0 | $4.1\times10^{7}$ |
| Example 3 | Proxel XL2 (Avecia) | 3000 | 0 |
| Comparative Example 3 | - | 0 | $3.6\times10^{8}$ |

While the present invention was described in detail with particular embodiments, it is apparent to a person skilled in the art that various modifications can be made without departing from the spirit and the scope of the present invention.

The present application is based on Japanese patent application No. 2005-64329 filed on March 8, 2005, which is incorporated herein by reference in their entirety.

## Claims

1. An anisotropic dye film composition, comprising:

   a dichroic dye; an agent having at least one function selected from the group consisting of a fungicidal function, an antimicrobial function, and a bactericidal function; and
   a solvent.

2. The anisotropic dye film composition according to Claim 1, wherein an anisotropic dye film formed of the composition has a dichroic ratio of at least two.

3. The anisotropic dye film composition according to Claim 1, wherein the agent having at least one function selected from the group consisting of a fungicidal function, an antimicrobial function, and a bactericidal function is a compound having the following formula (1):

   [ Formula 6]

   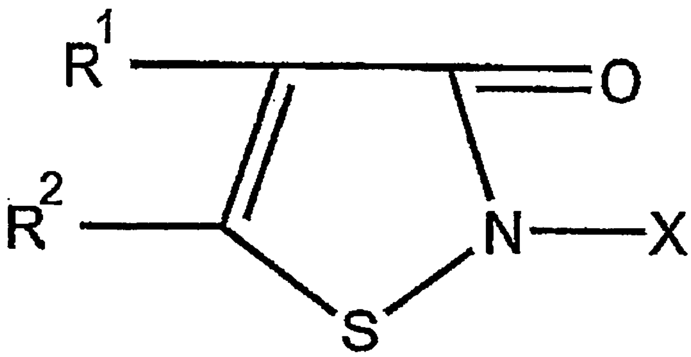

   ------ (1)

   wherein X denotes an alkyl group optionally having a substituent, a cycloalkyl group optionally having a substituent, or an aryl group optionally having a substituent, and $R^1$ and $R^2$ independently denote a hydrogen atom, a halogen atom, or an alkyl group.

4. The anisotropic dye film composition according to Claim 3, wherein the compound having the formula (1) is at least one compound selected from the group consisting of 2-chloromethyl-5-chloro-3-isothiazolone, 2-cyanomethyl-5-chloro-3-isothiazolone, 2-hydroxymethyl-5-chloro-3-isothiazolone, 2-(3-methylcyclohexyl)-3-isothiazolone, 2-(4-chlorophenyl)-4,5-dichloro-3-isothiazolone, 2-(4-ethylphenyl)-3-isothiazolone, 2-(4-nitrophenyl)-5-chloro-3-isothiazolone, 2-chloromethyl-3-isothiazolone, 2-methoxyphenyl-4-methyl-5-chloro-3-isothiazolone, and 2-morpholinomethyl-5-chloro-3-isothiazolone.

5. An anisotropic dye film formed of the anisotropic dye film composition according to Claim 1.

6. An anisotropic dye film comprising a dichroic dye and an agent having at least one function selected from the group consisting of a fungicidal function, an antimicrobial function, and a bactericidal function.

**7.** The anisotropic dye film according to Claim 5, wherein the anisotropic dye film has a dichroic ratio of at least two.

**8.** The anisotropic dye film according to Claim 4, wherein the agent is compatible or in a phase separation state of 1000 nm or less.

**9.** The anisotropic dye film according to Claim 6, wherein the agent is compatible or in a phase separation state of 1000 nm or less.

**10.** A polarizing element comprising the anisotropic dye film according to Claim 4.

**11.** A polarizing element comprising the anisotropic dye film according to Claim 6.

Fig. 1

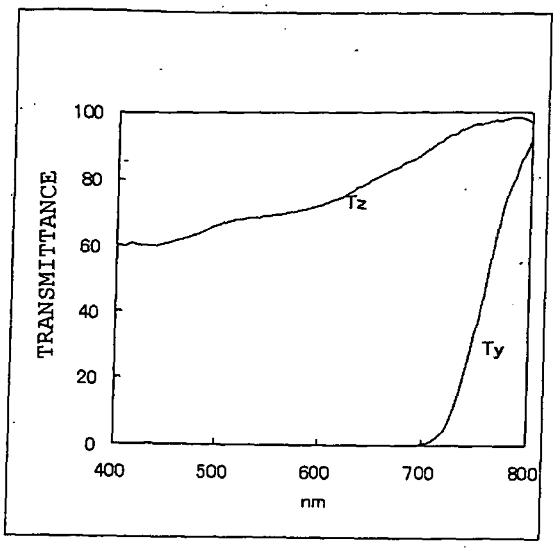
100
80
60
40
20
0
TRANSMITTANCE
Tz
Ty
400
500
600
700
800
nm

Fig. 2

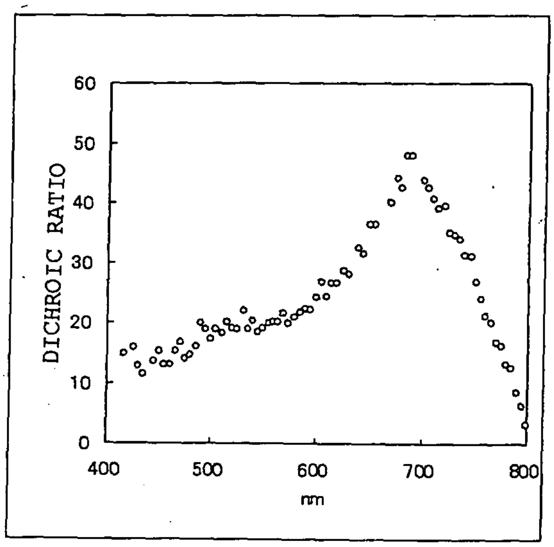
60
50
40
30
20
10
0
DICHROIC RATIO
400
500
600
700
800
nm

**INTERNATIONAL SEARCH REPORT**

International application No. PCT/JP2006/303886

A. CLASSIFICATION OF SUBJECT MATTER
*G02B5/30*(2006.01), *G02F1/1335*(2006.01)

According to International Patent Classification (IPC) or to both national classification and IPC

B. FIELDS SEARCHED

Minimum documentation searched (classification system followed by classification symbols)
*G02B5/30*(2006.01), *G02F1/1335*(2006.01)

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | WO 99/36258 A1 (MINNESOTA MINING AND MANUFACTURING CO.), 22 July, 1999 (22.07.99), Page 105, line 14 to page 106, line 25; page 107, lines 21 to 26 & JP 2002-509271 A | 6,11<br>1-5,7-10 |
| Y | JP 8-190014 A (Kuraray Co., Ltd.), 23 July, 1996 (23.07.96), Par. Nos. [0013] to [0017] (Family: none) | 1-5,7-10 |
| Y | US 6337111 B1 (Fuji Photo Film Co., Ltd.), 08 January, 2002 (08.01.02), Column 7, line 6 to column 8, line 44; Fig. 3 & JP 11-305036 A | 1-5,7-10 |

☒ Further documents are listed in the continuation of Box C.   ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 03 April, 2006 (03.04.06) | 18 April, 2006 (18.04.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.
PCT/JP2006/303886

C (Continuation). DOCUMENTS CONSIDERED TO BE RELEVANT

| Category* | Citation of document, with indication, where appropriate, of the relevant passages | Relevant to claim No. |
|---|---|---|
| Y | JP 11-101964 A (Sony Corp.), 13 April, 1999 (13.04.99), Par. Nos. [0009], [0010], [0039] to [0045] (Family: none) | 2,7 |
| Y | JP 2002-294092 A (Sumitomo Chemical Co., Ltd.), 09 October, 2002 (09.10.02), Par. Nos. [0002] to [0004] (Family: none) | 2,7 |
| Y | JP 6-145122 A (Yoshitomi Pharmaceutical Industries, Ltd.), 24 May, 1994 (24.05.94), Claim 3: Par. Nos. [0001], [0028], [0029], [0049] (Family: none) | 3,4,10 |
| Y | JP 10-306085 A (Nissan Chemical Industries, Ltd.), 17 November, 1998 (17.11.98), Par. Nos. [0001], [0032] (Family: none) | 3,4,10 |
| Y | JP 2001-100041 A (Fuji Photo Film Co., Ltd.), 13 April, 2001 (13.04.01), Par. Nos. [0021], [0028] (Family: none) | 8,9 |
| Y | JP 6-148427 A (Mitsui Toatsu Chemicals, Inc.), 27 May, 1994 (27.05.94), Par. No. [0013] (Family: none) | 8,9 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2400877 A
- JP 2000278 A
- JP 2841377 B
- JP 3094113 B
- JP 3168850 B
- JP 2002169025 A
- JP 2003029030 A
- JP 2005064329 A


### Non-patent literature cited in the description


- **DREYER, J.F.** The Fixing of Molecular Orientation. *Phys. and Colloid Chem.,* 1948, vol. 52, 808
- **DREYER, J.F.** Light Polarization From Films of Lyotropic Nematic Liquid Crystals. *Journal de Physique,* 1969, vol. 4, 114
- **DREYER, J.F.** The Fixing of Molecular Orientation. *Phys. And Colloid Chem.,* 1948, vol. 52, 808
- **DREYER J.F.** Light Polarization From Films of Lyotropic Nematic Liquid Crystals. *Journal de Physique,* 1969, vol. 4, 114
- Handbook of Liquid Crystals Vol. 2B: Low Molecular Weight Liquid Crystals II. **J. LYDON.** Chromonics. Willey-VCH, 1998, vol. 2B, 981-1007
- Ekisyou Binran. Maruzen Co., Ltd, 30 October 2000, 226-239
- **Y. HARASAKI.** Koutingu Housiki. Maki Syoten, 30 October 1979, 3, 6-154
- Bunsi Kyocho Zairyo No Sousei To Ouyou. CMC Publishing Co., Ltd, 03 March 1998, 118-149